# EUROPÄISCHE PATENTANMELDUNG

(11) **EP 2 886 681 A1**
(43) Veröffentlichungstag der Anmeldung: **24.06.2015**
(21) Anmeldenummer: 14003891.0
(22) Anmeldetag: 28.11.2014
(51) Int. Cl.: C25B 15/02, C25B 1/04, C25B 9/08

(54) **Elektrochemische Elektrolysezelle für die Wasserelektrolyse sowie Verfahren zum Betreiben derselben**

(30) Priorität: 20.12.2013 DE 102013021771
(71) Anmelder: Forschungszentrum Jülich GmbH, 52425 Jülich (DE)
(72) Erfinder: Schalenbach, Maximilian, 50825 Köln (DE)

(57) **Zusammenfassung**

Die erfindungsgemäße Elektrolysezelle, weist neben einer Anode und einer Kathode wenigstens eine weitere, zusätzliche Elektrode auf, wobei wenigstens zwei der drei Elektroden, vorteilhaft die dritte Elektrode und die Anode, über einen Widerstand miteinander verbunden sind, wobei der Widerstand einen maximalen Widerstand von 1 k Ohm aufweist. Die Anordnung ist somit nicht mit einer Referenzelektrodenanordnung zu verwechseln.

Die Erfindung betrifft ein Verfahren zum Betreiben einer Elektrolysezelle, insbesondere eine Elektrolyse zur Zerlegung von Wasser, bei dem erfindungsgemäß wenigstens eine dritte Elektrode und die Anode oder eine dritte und zusätzlich eine vierte Elektrode jeweils über einen Widerstand miteinander verbunden sind, und so jeweils als integrierte Brennstoffzelle fungieren.

An den als integrierte Brennstoffzelle fungierenden Elektroden kann während des Elektrolysebetriebs vorteilhaft eine elektrische Leistung abgegriffen werden, und so zumindest teilweise eine Energierückgewinnung des nachteilig durch den Elektrolyten permeierenden Wasserstoffs in Form von elektrischer Energie erfolgen. Sofern erfindungsgemäß mehr als eine zusätzliche Elektrode innerhalb des Elektrolyten angeordnet werden, erfolgt der Spannungsabgriff vorteilhaft zwischen den zusätzlichen Elektroden (dritte und vierte Elektrode).

## Beschreibung

Die Erfindung betrifft eine elektrochemische Zelle, insbesondere eine Elektrolysezelle. Die Erfindung betrifft ferner ein Verfahren zum Betreiben der vorgenannten Elektrolysezelle, insbesondere für die Wasserelektrolyse.

### Stand der Technik

Unter einem Elektrolyseur versteht man eine elektrochemische Zelle, bei der durch das Anlegen eines elektrischen Stroms durch einen leitfähigen Elektrolyten an getrennten Elektroden eine nicht freiwillig ablaufende Redoxreaktion erzwungen wird. An der Kathode findet die Reduktionreaktion statt, an der Anode die Oxidationsreaktion. Die Produkte der Elektrolyse entstehen an der Phasengrenze der Elektroden zu dem Elektrolyten.

Die Kathode, zu der die Elektronen fließen bildet den Minuspol, an der positiv geladenen Ionen (Kationen) reduziert werden, und die Anode den Pluspol, an der negativ geladenen Ionen (Anionen) oxidiert werden und von der die Elektronen wegfließen. Oft wird ein saures oder alkalisches Medium verwendet. Bei dem sauren Medium sind Protonen an der Reaktion beteiligt, im basischen Medium sind es Hydroxidionen.

Durch einen Separator, eine Membran oder ein Diaphragma, können die Produkte voneinander getrennt werden, jedoch muss die Ionenleitfähigkeit des Elektrolyten erhalten bleiben.

Im Fall der Wasserelektrolyse wird Wasserstoff an der Kathode und Sauerstoff an der Anode produziert. Dafür kann ein flüssiger Elektrolyt (meist eine Lauge) oder ein fester alkalischer oder saurer Elektrolyt wie zum Beispiel eine Polymer-Elektrolyt-Membran verwendet werden. Die alkalischen Polymer-Elektrolyt-Membranen befinden sich noch im Versuchsstadium und konnten bis jetzt keine Langzeitstabilität zeigen.

Die Spannung, die für eine Elektrolyse mindestens angelegt werden muss, wird als Zersetzungsspannung (U_{z} oder E_{z}) bezeichnet. Darunter versteht man in der Elektrochemie die zur Durchführung einer Elektrolyse mindestens benötigte Differenz der Elektrodenpotentiale von Anode und Kathode. Das bedeutet, dass eine Elektrolysereaktion nur dann abläuft, wenn die angelegte Spannung mindestens der Zersetzungsspannung entspricht. Unterhalb der Zersetzungsspannung wirkt der Elektrolyt isolierend, da er im Idealfall nur Ionen und keine Elektronen leitet.

Sind in einer Elektrolytlösung unterschiedliche Ionensorten vorhanden, richtet sich die Abscheidung, bzw. die an den Elektroden ablaufenden Redox-Reaktionen theoretisch danach, welche Stelle in der Spannungsreihe die einzelnen Ionensorten einnehmen.

Bei mehreren vorhandenen reduzierbaren Kationen werden zunächst die Kationen reduziert, die in der Redoxreihe (Spannungsreihe) ein positiveres (schwächer negatives) Potential haben. Bei mehreren oxidierbaren Anionen werden zunächst diejenigen oxidiert, die in der Redoxreihe möglichst nahe am Spannungsnullpunkt liegen, also ein schwächeres positives Redoxpotential besitzen.

Für jede Umwandlung von Ionen zu zwei- oder mehratomigen Molekülen kann die Zersetzungsspannung (Abscheidepotential) somit anhand des jeweiligen Redoxpotentials ermittelt werden. Die Elektrodenpotentiale lassen sich dabei mit Hilfe der Nernstschen Gleichung berechnen.

Das absolute Potential einer einzelnen Elektrode ist jedoch grundsätzlich nicht experimentell bestimmbar. Ermitteln lässt sich aber eine Potentialdifferenz zwischen zwei Elektroden. Bei Elektrodenpotentialen sollte deshalb immer mit angegeben werden, auf welche Referenzelektrode es bezogen ist.

Durch Verluste der Kinetik, des Stofftransportes und des Ohm'schen Widerstandes ist die aufzuwendende Spannung größer als die thermodynamisch notwendige Potentialdifferenz der Elektroden. Diese zusätzlichen Spannungen werden Überspannung oder auch Überpotential genannt.

Bei der Wasserelektrolyse wird Wasser elektrochemisch in Sauerstoff und Wasserstoff zerlegt. Das Gesamt-Reaktionsschema dieser Redoxreaktion lautet:

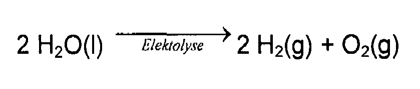

Nachteilig bei einer Elektrolyse mit gasförmigen Produkten kann sein, dass die zunächst an den Elektroden gebildeten Gase durch den Elektrolyten zur Gegenelektrode wandern (permeieren). Die Permeation der entstehenden Gase bei der Wasserelektrolyse kann beispielsweise zur Entstehung von Knallgasen führen, was ein sicherheitstechnisches Risiko darstellt. Die untere Explosionsgrenze liegt bei 4 mol-% H₂ in O₂. Als Gegenmaßnahmen dienen mit Katalysator beschichtete Stromsammler, die auf der Anodenseite den permeierten Wasserstoff katalytisch zusammen mit Sauerstoff zu Wasser reagieren sollen. Letztendlich wird neben der Gefährdüngsproblematik durch die unerwünschte Permeation von bereits gebildetem Wasserstoff als Produktgas an die Gegenelektrode zudem der Wirkungsgrad der Elektrolyse reduziert.

Neben den alkalischen Elektrolyten (KOH) sind auch "Polymer-Elektrolyt-Membranen" (PEM) oder "proton exchange membrane" (PEM) Stand der Technik. An den Elektroden treten die folgenden Teilreaktionen auf:

| | | |
|---|---|---|
| Kathodenraum: | 2H⁺ + 2e⁻ → H₂ | (für saure Lösungen) oder |
| | 2 H₂O + 2 e⁻ → H₂ + 2 OH⁻ | (für basische Lösungen) |
| Anodenraum: | H₂O → ½ O₂ + 2 H⁺ + 2 e⁻ | (für saure Lösungen) oder |
| | 4 OH⁻ → O₂ + 2 H₂O + 4 e⁻ | (für basische Lösungen) |

Der energetische Wirkungsgrad der Elektrolyse hängt von der Lastaufnahme, Temperatur und den Betriebsdrücken ab. Anlagenhersteller wie beispielsweise Electrolyser Corp., Brown Boveri, Lurgi, De Nora oder Epoch Energy Technology Corp. bieten bereits große Elektrolyseure mit einem Wirkungsgrad der nach Herstellerangaben über 70 % beträgt.

Da die Elektrolytkonzentration bei der alkalischen Elektrolyse sowie die Temperatur großen Einfluss auf den Zellwiderstand und somit auf die Energiekosten haben, wird bei modernen Anlagen eine 25 - 30 %-ige Kaliumhydroxid-Lösung (basische Wasserelektrolyse) verwendet, die Temperatur liegt bei ca. 50 - 90 °C. Die Stromdichte liegt bei ca. 0,15 - 0,5 A/cm², die Spannung bei ca. 1,90 V. Zur Herstellung von 1 m³ Wasserstoff (bei Normaldruck) wird bei modernen Anlagen eine elektrische Energie von 4,3 - 4,9 kWh benötigt. Ein großer Druckelektrolyseur von Lurgi hat eine Leistung von 760 m³/h Wasserstoff bei ca. 3,5 MW (Stackleistung) und ca. 4,5 MW Eingangsleistung (Wechselspannung). Durch Elektrokatalysatoren (bei Kathoden z. B. Ni-Co-Zn, Ni-Mo, bei Anoden: Nickel-Lanthan-Perowskit, Nickel-Kobalt-Spinell) kann die Überspannung um ca. 80 mV gesenkt werden. Nachteilig bei der alkalischen Elektrolyse sind der Einsatz von Kalilauge, die einen extrem ätzenden Gefahrenstoff darstellt, und die aufwändige Nachreinigung des erzeugten Wasserstoffs. Um den erzeugten Wasserstoff und Sauerstoff zu trennen wird ein Diaphragma verwendet, welches jedoch geringfügig gasdurchlässig ist. Die Permeation der beiden Produktgase zur Gegenelektrode mindert den Wirkungsgrad. Das Diaphragma hat einen nachteiligen Einfluss auf die Protonenleitfähigkeit und damit den Wirkungsgrad.

Bei der sauren Elektrolyse wird in der Regel eine Polymer-Elektrolyt-Membran (PEM) eingesetzt. Diese ist jedoch gasdurchlässig und eine Reduktion der Gasdurchlässigkeit geht beim derzeitigen Stand der Technik immer nur mit einer nachteiligen Verminderung der Protonenleitfähigkeit der Membran einher. Auch hier führen die Permeation und der Widerstand der Protonenleitfähigkeit zu einer Reduktion des Gesamtwirkungsgrades. Durch Verwendung von Platin als Katalysator an der Kathode kann hochreiner (> 99,999 %) Wasserstoff erzeugt werden, da Sauerstoff an der Kathode katalytisch verbrannt oder elektrochemisch reduziert wird.

Verglichen mit der alkalischen Wasserelektrolyse erscheint derzeit die Elektrolyse mit einer Polymer-Elektrolyt-Membran (PEM) auf Grund ihrer höheren Effizienz, Ihrer Gasreinheit, ihrer variableren Stromdichte und damit dynamischen Strombereich als vielversprechender. Zudem kann bei Verwendung einer Polymer-Elektrolyt-Membran der gebildete Wasserstoff bereits während der Elektrolyse vorteilhaft verdichtet werden, da die Membran nur wenig gasdurchlässig ist und eine besonders hohe mechanische Stabilität aufweist. Typische basische Wasserelektrolysen mit flüssigem Elektrolyten finden bei bis zu 30 bar statt, während die sauren Wasserelektrolysen mit einer PEM-Membran auch bei bis zu 200 bar auf der Kathodenseite betrieben werden. Auf der Kathodenseite kann dabei sowohl drucklos, als auch mit ausgeglichenem Druck (= identischer Druck auf Anoden- und Kathodenseite) gearbeitet werden kann.

Aktuelle Untersuchungen und Simulationen [1] haben jedoch ergeben, dass der Anteil an Wasserstoff, der durch den Cross-over bei der Wasserelektrolyse verloren geht, nicht unerheblich ist, und insbesondere bei höheren Drücken der Produktgase zum Tragen kommt.

Die Untersuchungen wurden dazu an mit Katalysator beschichteten Membranen durchgeführt. Als Polymer-Elektrolyt-Membran wurde Nafion® verwendet, die Kathode umfasste mit Platin geträgerten Kohlenstoff und die Anode Iridiumoxid als Katalysatoren. Bei beiden Elektroden wurde ein regelbarer Wasserkreislauf vorgesehen. Ermittelt wurde in-situ der Wasserstoffgehalt im Sauerstoff auf der Anodenseite. Es konnte gezeigt werden, dass der auf der Anodenseite vorliegende Wasserstoff durch den Iridiumoxid Katalysator nicht elektrochemisch umgesetzt wird und somit am anodischen Gasausgang nicht wiedergewonnen werden kann.

### Aufgabe und Lösung

Die Aufgabe der Erfindung ist es, bei der Wasserelektrolyse die unerwünschte Permeation mindestens einer der Produktgase durch den Elektrolyten zur Gegenelektrode effektiver zu reduzieren, als es bislang aus dem Stand der Technik bekannt ist, und/oder den Gesamtwirkungsgrad des System zu steigern.

Eine weitere Aufgabe der Erfindung ist es, eine Elektrolysezelle für die Wasserelektrolyse bereit zu stellen, mit dessen Hilfe der vorgenannte verfahrenstechnische Vorteil verwirklicht werden kann.

Die Aufgaben der Erfindung werden gelöst durch eine Vorrichtung gemäß Hauptanspruch, sowie durch ein Verfahren zum Betreiben der Vorrichtung gemäß Nebenanspruch. Vorteilhafte Ausgestaltungen der Vorrichtung und des Verfahrens finden sich in den jeweils davon abhängigen Unteransprüchen wieder.

### Gegenstand der Erfindung

Die Erfindung sieht dazu eine bekannte Elektrolysevorrichtung mit einer ersten Elektrode (Kathode) und einer zweiten Elektrode (Anode), die an eine Gleichspannungsquelle angeschlossen sind, sowie mit einem Elektrolyten vor, bei der nunmehr erfindungsgemäß innerhalb des Elektrolyten zwischen der Anode und der Kathode wenigstens eine weitere, dritte Elektrode oder auch zwei weitere Elektroden (dritte und vierte Elektrode) angeordnet sind.

Diese zusätzlichen Elektroden, die jeweils über eine Gleichspannungsquelle mit einer der Elektroden verbunden ist, haben insofern nicht die Funktion einer Referenzelektrode. Bei einer Referenzelektrode wird die Potentialdifferenz zwischen einer Elektrode und der Referenzelektrode dadurch ermittelt, dass diese über einen Ionenleiter und über einen elektrischen Leiter mit einem geeigneten Messgerät, beispielsweise einem hochohmigen Voltmeter oder einer Potentiometerschaltung verbunden werden.

Um die Spannung zwischen einer Referenzelektrode und einer Arbeitselektrode zu messen, wird regelmäßig ein Spannungsmessgerät verwendet. Ein günstiges Spannungsmessgerät hat einen Innenwiderstand von zum Beispiel 1*10⁷ Ω (Keithley Model 2110, Widerstand entnommen aus datasheet). Teurere Spannungsmessgeräte haben einen deutlich höheren Innenwiderstand. Damit ist der Strom, der zwischen Referenzelektrode und Arbeitselektrode bei einem Volt Potentialdifferenz fließt, gemäß dem Ohm'schen Gesetz etwa 1*10⁻⁷ A, bei hochwertigen Spannungsmessgeräten sogar weniger. Der Einfluss, den die elektrochemische Reaktion an der Referenzelektrode auf die Zusammensetzung des Elektrolyten hat, ist aufgrund des kleinen Stroms vernachlässigbar.

Im Rahmen der Erfindung sollen die zusätzlichen Elektroden über deutlich kleinere Widerstände mit den Elektroden verbunden werden. Damit sind höhere Ströme zwischen der zusätzlichen Elektrode und den anderen Elektroden möglich. Demnach können die Stoffkonzentrationen im Elektrolyten merklich beeinflusst werden. Um bei einer Volt Potentialdifferenz zwischen der zusätzlichen Elektrode und einer anderen Elektrode einen nicht vernachlässigbaren Strom von beispielsweise mindestens 1 mA zu erhalten, sind demnach Widerstände unterhalb von 1 kΩ zu verwenden. Umso größer der Stoffumsatz sein soll, umso größer muss der Strom sein, bzw. desto kleiner muss der Widerstand sein.

Die Grundidee der Erfindung ist es, dass zumindest ein Teil des während des Betriebs an der Kathode erzeugten Wasserstoffs, der zu einem nicht unerheblichen Teil durch den Elektrolyten zur Gegenelektrode (Anode) diffundiert und damit nachteilig zu einer Verringerung der Effektivität führt, elektrochemisch mit Sauerstoff umgesetzt wird. Je nach Ausgestaltung des Verfahrens, kann die chemische Energie des durch die Membran tretenden Wasserstoffs teilweise in Form von elektrischer Energie zurückgewonnen werden, und/oder zur Reduktion des anodischen Potentials verwendet werden. Dazu sollte wenigstens eine der zusätzlichen Elektroden als Anode einer integrierten Brennstoffzelle fungieren, an der Wasserstoff wieder zurück in Protonen und Elektronen umgewandelt werden kann.

Die erfindungsgemäße Elektrolysezelle ist insbesondere für die Wasserelektrolyse geeignet. Insbesondere lässt sich diese Technik sowohl für die alkalische als auch für die saure Wasserelektrolyse mit flüssigem Elektrolyten und die Polymer-Elektrolyt-Membran Wasserelektrolyse (PEM-WE) anwenden.

Bei der Wasserelektrolyse wird an der Kathode Wasserstoff entwickelt. Die Permeation des gebildeten Wasserstoffs durch den Elektrolyten, erfolgt auf Grund der thermischen Diffusion und den Druckunterschieden zwischen den beiden Elektrodenseiten. Bei zunehmenden Temperaturen und insbesondere höheren Drücken auf der Kathodenseite steigt die Permeation durch den Elektrolyten. Durch die Permeation des Wasserstoffs durch den Elektrolyten zur Gegenelektrode kann ein explosionsfähiges Gemisch mit dem erzeugten Sauerstoff an der Anode entstehen. Des Weiteren kommt es bislang nachteilig zu einer Reduktion der Effizienz durch die Wasserstoffpermeation durch die Membran.

Neben der Wasserstoffpermeation von der Kathode zur Anode kommt es auch zur Sauerstoffpermeation von der Anode durch den Elektrolyten zur Kathode. Dieser kann an der Kathode mit Wasserstoff zu Wasser umgesetzt werden und zudem den produzierten Wasserstoff verunreinigen. Die Umsetzungsrate des permeierenden Sauerstoffs ist abhängig vom eingesetzten kathodischen Katalysator. Durch die chemische Umsetzung von Wasserstoff und Sauerstoff zu Wasser wird die investierte Energie für die Elektrolyse des Wassers zu Nichte gemacht, so dass es auch durch die Sauerstoffpermeation nachteilig zu einer Reduktion des Wirkungsgrads kommt. Der Sauerstoffanteil am produzierten Wasserstoff wird in der Regel nachträglich ebenfalls durch die katalytische Verbrennung reduziert. Demnach führt auch der Sauerstoff im Wasserstoff zu einer Reduktion des Wirkungsgrades.

In einer erfindungsgemäßen Ausführung mit nur einer weiteren Elektrode, d. h. einer dritten zwischen der Anode und der Kathode angeordneten Elektrode, ist vorgesehen, dass diese zusätzliche dritte Elektrode über einen Widerstand mit der Anode verbunden ist und so eine innerhalb der Elektrolysezelle angeordnete (integrierte) Brennstoffzelle bildet. Während des Elektrolysebetriebs wird an der zusätzlichen dritten Elektrode, die die Anode der integrierten Brennstoffzelle bildet, an der der von der ersten Elektrode (Kathode) erzeugte und durch den sauren Elektrolyten diffundierte Wasserstoff, der hier im Überschuss vorliegt, zumindest teilweise wieder zu Protonen umgesetzt wird. Die zweite Elektrode (Anode) der Wasserelektrolyse stellt in diesem Fall gleichzeitig auch die Kathode für die integrierte Brennstoffzelle dar. Diese Ausführungsform der Erfindung ist insbesondere beim Betrieb mit einem hohen Differenzdruck von Vorteil, wie es zum Beispiel mit sauren oder alkalischen Polymerelektrolytmembranen möglich ist. Unter einem hohen Differenzdruck ist im Rahmen der Erfindung zu verstehen, dass der Druck auf der Kathodenseite der Elektrolysezelle deutlich höher als auf der Anodenseite eingestellt wird. Typische Drücke beim Differenzdruckverfahren liegen zum Beispiel auf der Kathodenseite bei mehr als 5 bar, insbesondere bei mehr als 50 bar, vorteilhaft bei mehr als 100 bar bis hin zu 200 bar, während die Anodenseite drucklos betrieben werden kann. Der hohe Druck auf der Kathodenseite verstärkt in der Regel die nachteilige Permeation des an der Kathode gebildeten Wasserstoffs durch den Elektrolyten zur Gegenelektrode. Die Permeation des Sauerstoffs durch den niedrigen Druck an der Anode ist damit ungefähr hundertmal kleiner als die des Wasserstoffs [1]. In der vorgenannten erfindungsgemäßen Ausgestaltung mit einer integrierten Brennstoffzelle durch eine dritte Elektrode wird die nachteilige Wasserstoffpermeation vorteilhaft genutzt, in dem zumindest teilweise daraus elektrische Energie zurück gewonnen wird.

Andererseits führt die Brennstoffzellenreaktion zwischen der dritten Elektrode und der Anode der Elektrolyse zu einer Erniedrigung ihres Potentials, da die Überspannung der Brennstoff-zellenreaktion entgegengesetzt zu der der Elektrolyse ist. Damit kann ein und derselbe Elektrolysestrom mit einer kleineren angelegten Spannung als ohne die dritte Elektrode realisiert werden. Die aufgewendete Energie für den produzierten Wasserstoff ist damit auch niedriger. Demnach wäre es auch möglich einen minimal kleinen Widerstand zwischen der dritten Elektrode und der Anode zu wählen, bzw. beide Elektroden kurzzuschließen. Dadurch könnte das anodische Potential der Elektrolysezelle durch die elektrochemische Umsetzung des sich in der Membran befindlichen Wasserstoffs maximal reduziert werden.

In einer weiteren erfindungsgemäßen Ausführung mit zwei weiteren Elektroden zwischen der ersten Elektrode (Kathode) und der zweiten Elektrode (Anode) ist vorgesehen, dass die beiden zusätzlichen Elektroden untereinander über einen Widerstand miteinander verbunden sind. In diesem Fall wird während des Betriebs der Elektrolysezelle an der zusätzlichen dritten Elektrode, die die Anode der integrierten Brennstoffzelle bildet, der von dieser erzeugte und durch den sauren Elektrolyten diffundierende Wasserstoff, der hier im Überschuss vorliegt, zumindest teilweise wieder zu Protonen umgesetzt. Gleichzeitig findet an der vierten Elektrode, eine Umsetzung von dem an der Anode erzeugten und durch den Elektrolyten diffundierten Sauerstoff mit den Protonen zu Wasser statt.

Je nach eingesetztem Katalysator ist eine Anordnung, bei der die dritte Elektrode (Anode für die integrierte Brennstoffzelle) näher an der Kathode der Elektrolysezelle, und die vierte Elektrode (Kathode für die integrierte Brennstoffzelle) näher an der Anode der Elektrolysezelle angeordnet ist, besonderes vorteilhaft, aber nicht zwingend.

Die an der integrierten Brennstoffzelle ablaufenden Reaktionen entsprechen zwar theoretisch der Umkehrung der eigentlich gewünschten Wasserelektrolyse, allerdings in einem deutlich geringeren Umfang. Mit Hilfe der vorliegenden Erfindung kann die nachteilige Permeation sowohl des Wasserstoffs als auch in geringerem Maße des Sauerstoffs zumindest teilweise vorteilhaft in Form von elektrischem Strom genutzt werden.

Diese zweite Ausführungsform der Erfindung ist insbesondere im Betrieb bei unter Druck gesetzten anodischen und kathodischen Räumen von Vorteil. Die unter Druck gesetzte Anode erhöht die Sauerstoffpermeation, die schließlich auch maßgeblich zu einer Erniedrigung des Wirkungsgrads beiträgt.

Die an der integrierten Brennstoffzelle abgegriffene Leistung kann in beiden Fällen mit drei oder vier Elektroden je nach Wahl des verwendeten Widerstandes R in ihrer Strom-Spannungs-Charakteristik ausgelegt werden. Nachfolgend werden die Wirkungsweisen für die beiden Grenzwerte für R gegen 0 und für R gegen unendlich dargestellt.

Wird ein sehr hoher Widerstand (R gegen unendlich) verwendet, so baut sich zwischen den Polen der Brennstoffzelle eine Spannung auf, die maximal die Zersetzungsspannung von Wasser erreichen kann (1,23 V). Jedoch wäre der Strom, der zwischen den Elektroden fließt gering und die Permeation würde nur geringfügig gestoppt werden, da nicht alles von dem an dem Katalysator auftreffenden Gas umgesetzt werden kann.

Wird andererseits ein nur sehr kleiner Widerstand (R gegen 0) verwendet, so kann ein Großteil der permeierenden Gase elektrochemisch umgesetzt werden. Jedoch wäre die Spannung zwischen den Elektroden gering, so dass die zur Verfügung stehende Leistung durch die elektrochemische Umsetzung der Gase ebenfalls gering wäre.

In der Praxis ist der Widerstand von einem Fachmann daher in Form einer Optimierungsaufgabe derart zu wählen, dass der Großteil der permeierenden Gase umgesetzt wird, aber die Spannung zwischen den Elektroden möglichst groß ist.

An den als integrierte Brennstoffzelle fungierenden Elektroden kann während des Elektrolysebetriebs eine Spannung, bzw. ein Strom abgegriffen werden, und so zumindest teilweise eine Energierückgewinnung insbesondere des nachteilig durch den Elektrolyten permeierenden Wasserstoffs in Form von Strom erfolgen. Sofern erfindungsgemäß mehr als eine zusätzliche Elektrode innerhalb des Elektrolyten angeordnet werden, erfolgt der Spannungsabgriff vorteilhaft zwischen den zusätzlichen Elektroden (dritte und vierte Elektrode).

Die zusätzlichen dritten und/oder vierten Elektroden umfassen neben einem Ionen leitenden Material, z. B. Elektrolytmaterial, auch ein Elektronen leitendes Material, welches mit einem Katalysator versehen ist, an dem die gewünschte elektrochemische Reaktion stattfindet. Im vorliegenden Fall der Wasserelektrolyse mit einem sauren Polymerelektrolyten ist für die Oxidation des kathodischen Produktes Wasserstoff als Katalysator beispielsweise ein mit Platin geträgerter Kohlenstoff in einem lonomergemisch geeignet. Für die vierte Elektrode könnte eine identische Elektrode verwendet werden. Im Falle der alkalischen Elektrolyse mit einem flüssigen Elektrolyt kann beispielsweise ein feinmaschiges oder poröses Material aus Nickel für die dritte Elektrode und/oder vierte Elektrode verwendet werden.

Das Betreiben einer erfindungsgemäßen Elektrolysezelle umfasst das Verbinden der dritten Elektrode entweder mit der Anode oder der vierten Elektrode jeweils über einen Widerstand R.

Während des Betriebs der Wasserelektrolyse finden an der dritten bzw. vierten Elektrode die folgenden Reaktionen statt:

| | | | |
|---|---|---|---|
| Dritte Elektrode: | H₂ | → 2H⁺ + 2 e⁻ | (für saure Lösungen) oder |
| | (H₂ + 2 OH⁻ | → 2 H₂O + 2 e⁻ | (für basische Lösungen)) |
| Vierte Elektrode: | ½ O₂ + 2 H⁺ + 2 e⁻ | → H₂O | (für saure Lösungen) oder |
| | (O₂ + 2 H₂O + 4 e⁻ | → 4 OH⁻ | (für basische Lösungen)) |

Zum Betreiben der erfindungsgemäßen Elektrolysezelle wird für die elektrochemische Umsetzung zwischen der Kathode und der Anode mindestens die thermodynamisch notwendige reversible Spannung für die Elektrolysereaktion angelegt. Bei der Wasserelektrolyse sind das beispielsweise 1,23 V. In der Praxis werden jedoch realistisch aufgrund von Verlusten Spannungen zwischen 1,5 und 2,5 V eingestellt. Die Spannungsverluste an der Kathode und Anode sind abhängig vom Elektrodenmaterial und der Güte des Katalysators, sowie der Leitfähigkeit der verwendeten Materialien. Die Überspannungen an der Kathode sind negativ und die der Anode positiv. Sie steigen in ihrem Betrag mit dem Elektrolysestrom.

Je nach Ausgestaltung der erfindungsgemäßen Elektrolysevorrichtung, das heißt, je nach dem, welche Elektroden zusätzlich durch Widerstände verbunden werden, lassen sich vorteilhaft unterschiedliche Verfahrensführungen realisieren.

Ferner können auch unterschiedliche Drücke auf der Anoden- und Kathodenseite eingestellt werden, durch die die Verfahrensführung und damit auch die Effektivität des Verfahrens jeweils beeinflusst werden können.

Zudem ist zu unterscheiden, ob die erfindungsgemäße Vorrichtung mit einem Kationen oder mit einem Anionen leitenden Elektrolyten eingesetzt wird. So kann beispielsweise die Wasserelektrolyse sowohl mit einem sauren Elektrolyten, als auch im basischen Milieu durchgeführt werden. Als saurer sowie basischer Elektrolyt kann beispielsweise eine Säure bzw. eine Lauge als flüssiger Elektrolyt eingesetzt werden. Geeignet ist auch eine Polymer-Elektrolyt-Membran (PEM) als fester Elektrolyt. Auch Kombinationen von flüssigen und festen Elektrolyten sind denkbar und werden derzeitig erforscht.

Das erfindungsgemäße Verfahren und die erfindungsgemäße Elektrolysevorrichtung sind insbesondere bei einer dynamischen Betriebsführung, wie beispielsweise bei der Speicherung von Windkraft über eine Wasserelektrolyse sinnvoll, da die Wasserstoffpermeation unterbunden werden kann und somit die Sicherheitsproblematik von explosiven Gasgemischen reduziert werden kann. Des Weiteren kann der Verlust durch den Crossover teilweise in Form von elektrischer Energie zurückgewonnen werden.

### 1. Beispielhafte Ausgestaltungen der Verfahrensführung mit drei Elektroden am Beispiel der Wasserelektrolyse.

In dieser Ausgestaltung wird - wie bei einer herkömmlichen Elektrolysezelle - die Anode und die Kathode an eine Gleichspannungsquelle angeschlossen und mit einer Gleichspannung beaufschlagt, die mindestens der für die Elektrolyse erforderlichen Zersetzungsspannung entspricht. Zusätzlich wird die Anode und die dritte Elektrode über einen Widerstand verbunden, wobei der Widerstand an die Betriebsbedingungen anzupassen ist wie oben erläutert. Die dritte Elektrode übernimmt die Funktion der Anode der integrierten Brennstoffzelle.

Der an der Kathode produzierte Wasserstoff (Produktgas), wird zum Teil als Produktgas abgegriffen. Ein nicht unerheblicher Teil wandert jedoch nachteilig im Elektrolyten zur Gegenelektrode und führt daher zu Verlusten. Ein Teil dieses permeierenden Wasserstoffs wird erfindungsgemäß an der dritten Elektrode wieder elektro-chemisch oxidiert. Im sauren werden die damit erzeugten Protonen an der Anode mit dem Sauerstoff umgesetzt. Im basischen werden Hydroxid-Ionen durch die Wasserstoffoxidation verbraucht und an der Anode erzeugt.

Die vorteilhafte Ausnutzung der Rückgewinnung von Energie aus der integrierten Brennstoffzelle mit einer zusätzlichen dritten Elektrode kann durch eine große Druckdifferenz zwischen Anoden- und Kathodenseite vorteilhaft verstärkt werden, da beim hohen Drücken auf der Kathodenseite auch die nachteilige Wasserstoffpermeation durch den Elektrolyten zur Gegenelektrode erhöht ist. Demnach ist das Verfahren besonders effektiv, wenn auf der Kathodenseite hohe Drücke eingestellt werden, wie beispielsweise bis 30 bar oder sogar bis 200 bar. Eine solche Verfahrensführung mit einem hohen Druck auf der Kathodenseite ermöglicht vorteilhaft, dass der während der Elektrolyse auf der Kathodenseite erzeugte Wasserstoff direkt unter hohem Druck abgeführt oder gespeichert werden kann, unter geringeren Verlusten und größerer Gasreinheit als es ohne die dritte Elektrode der Fall wäre.

Bei einer unter Druck gesetzten Anode kann eine vierte Elektrode zusätzlich auch noch die Sauerstoffpermeation durch die Membran stoppen, in dem sie über einen Widerstand mit der dritten Elektrode verbunden wird. Damit findet die Brennstoffzellenreaktion zwischen der dritten und vierten Elektrode ab.

Im Fall der sauren Wasserelektrolyse können beispielsweise Katalysatorschichten eingesetzt werden, in denen eine Protonen- und Elektronen leitende Phase vorkommt, und die durch die Vermischung eines Protonen leitenden Polymers mit einem Elektronen leitenden geträgerten Katalysators hergestellt werden. An der Anode wird im Regelfall Iridiumoxid als Katalysator verwendet, an welchem Wasserstoff nicht oxidiert werden kann. An der Kathode wird gewöhnlich Platin als Katalysator eingesetzt, welches in Analogie zur Brennstoffzelle für die Wasserstoffoxidation auch an der dritten und/oder vierten Elektrode verwendet werden kann.

Für die Anordnung der zusätzlichen Elektrode, bzw. der zusätzlichen Elektroden innerhalb des Elektrolyten können einige Annahmen gemacht werden. Die zusätzliche Elektrode, bzw. die zusätzlichen Elektroden sollten sich prinzipiell zwischen den beiden anderen Standardelektroden, nämlich der Anode und der Kathode, befinden. Die optimale Lage der zusätzlichen Elektrode in Bezug auf die Anode und die Kathode kann dabei gegebenenfalls von einem Fachmann experimentell ermittelt werden.

Ist beispielsweise die zusätzliche dritte Elektrode über eine Last mit der Anode verbunden, so gibt es einige Faktoren, die die optimale Position derer beeinflussen. Die dritte Elektrode sollte sich bei hohem Differenzdruck vorteilhaft nahe an der Anode befinden. Zur Anode hin ist die Wasserstoffkonzentration am niedrigsten. Damit kann der Wasserstoff zwischen der Kathode und der dritten Elektrode noch teilweise zur Kathode zurückdiffundieren, bevor er letztendlich an einem Durchtreten durch die Membran mittels der dritten Elektrode gehindert wird.

Nahe an der Anode ist jedoch die Sauerstoffkonzentration hoch. An dem Katalysator der dritten Elektrode kann es demnach möglicherweise auch zu einer katalytischen Rekombination beider Gase im Elektrolyten kommen. Dies würde jedoch nachteilig den Verlust an Wasserstoff bedeuten. Demnach ist die Position der dritten Elektrode insbesondere so zu wählen, dass einerseits eine geringe Sauerstoffkonzentration vorzufinden ist und andererseits der Abstand zur Kathode möglichst hoch ist. Eine absolute Angabe zur Anordnung der zusätzlichen Elektroden kann hier nicht gegeben werden, da die Konzentration der Gase im höchsten Maße von den Drücken, Abständen der Elektroden und der Permeabilität des Elektrolyten abhängen. Die exakte Anordnung ist somit einem Fachmann zu überlassen, der je nach Anforderung eine optimale Lösung dafür herbeiführen kann.

### 2. Beispielhafte Ausgestaltungen der Verfahrensführung mit vier Elektroden am Beispiel der Wasserelektrolyse.

In einer weiteren Ausgestaltung der Erfindung ist vorgesehen, dass bei der Elektrolysezelle nicht nur eine zusätzliche dritte, sondern auch eine zusätzliche vierte Elektrode eingesetzt wird. Vorteilhaft, aber nicht zwingend, ist die zusätzliche dritte Elektrode dabei zwischen der Kathode und der vierten Elektrode angeordnet.

Vorteilhaft wären auch die Anordnung der zusätzlichen dritten Elektrode soweit entfernt wie möglich von der Kathode und die Anordnung der zusätzlichen vierten Elektrode ebenfalls so weit entfernt wie möglich von der Anode, um die Konzentrationen der Produkte an den zusätzlichen Elektroden klein zu halten. Damit können die Produkte noch teilweise zu ihren ursprünglichen Elektroden zurückdiffundieren. Dabei ist zu verhindern, dass die durch den Elektrolyten permeierenden Produktgase wieder rekombinieren, indem man zum Beispiel selektive Katalysatoren verwendet, oder die dritte Elektrode vorteilhaft zwischen der Kathode und der vierten Elektrode anordnet. Im Fall der Wasserelektrolyse kann auf diese Weise beispielsweise die Gefahr von explosiven Gasgemischen weiter herabgesetzt werden.

Die dritte Elektrode kann über einen Widerstand mit einer zusätzlichen vierten Elektrode anstelle der Anode verbunden werden. Dadurch kann neben der Wasserstoffpermeation auch die Sauerstoffpermeation durch die Membran gemindert werden. Gleichzeitig verschwindet dadurch die Reduktion der Überspannung an der Anode der Elektrolysezelle mit drei Elektroden durch die elektrochemische Wasserstoffumsetzung.

Die elektrochemischen Reaktionen an allen Elektroden der erfindungsgemäßen Vorrichtung sind nachfolgend für den Fall der Wasserelektrolyse ausgeführt. An der dritten Elektrode findet die Umkehrreaktion zur Kathode statt, an der vierten Elektrode die Umkehrreaktion zur Anode. Aufgrund der Überspannungen befinden sich die Potentiale der Anoden über der thermodynamischen reversiblen Spannung, bei der Kathode darunter. Die reversiblen Spannungen sind in den Klammern nach der Reaktion festgehalten. An den Elektroden zu den Umkehrreaktionen fallen die Überspannungen entgegengerichtet ab.

| Saure Wasserelektrolyse: | | | |
|---|---|---|---|
| Anode: | 2 H₂O | → O₂ + 4e- + 4H⁺ | (> 1,23 V) |
| Kathode: | 2H⁺ + 2e⁻ | → H₂ | (< 0 V) |
| Dritte Elektrode: | H₂ | → 2H⁺ + 2e⁻ | (> 0 V) |
| Vierte Elektrode: | O₂ + 4e⁻ + 4H⁺ | → 2 H₂O | (< 1,23 V) |

| Alkalische Wasserelektrolyse | | | |
|---|---|---|---|
| Anode: | 4OH⁻ | → O₂ + 2H₂O + 4e⁻ | (> 0,43 V) |
| Kathode: | 2H₂O + 2e⁻ | → H₂ + 2OH⁻ | (< - 0,8 V) |
| Dritte Elektrode: | H₂ + 2OH⁻ | → 2H₂O + 2e⁻ | (> - 0,8 V) |
| Vierte Elektrode: | O₂ + 2H₂O + 4e⁻ | → 4OH⁻ | (< 0,43 V) |

Die erfindungsgemäße elektrochemische Zelle betrieben als Elektrolyseur von Wasser in saurem Medium ermöglicht vorteilhaft die Erhaltung der Protonenleitfähigkeit des Elektrolyten bei gleichzeitiger Reduktion der nachteiligen Wasserstoffpermeation, und damit insgesamt eine Steigerung des Wirkungsgrads des Elektrolyseurs.

### Spezieller Beschreibungsteil

Eine beispielhafte Erläuterung des erfinderischen Gedankens erfolgt im Folgenden an einigen Ausführungsbeispielen für eine Hochdruck Polymer-Elektrolyt-Membran Wasserelektrolyse sowie an einigen Figuren, ist aber explizit nicht auf diese beschränkt.

In den Figuren bedeuten jeweils WE = Wasserelektrolyse, FC = integrierte Brennstoffzelle, U_{WE} = für die Wasserelektrolyse notwendige Zersetzungsspannung, U_{FC} = Spannung, die an der integrierten Brennstoffzelle abgegriffen werden kann.

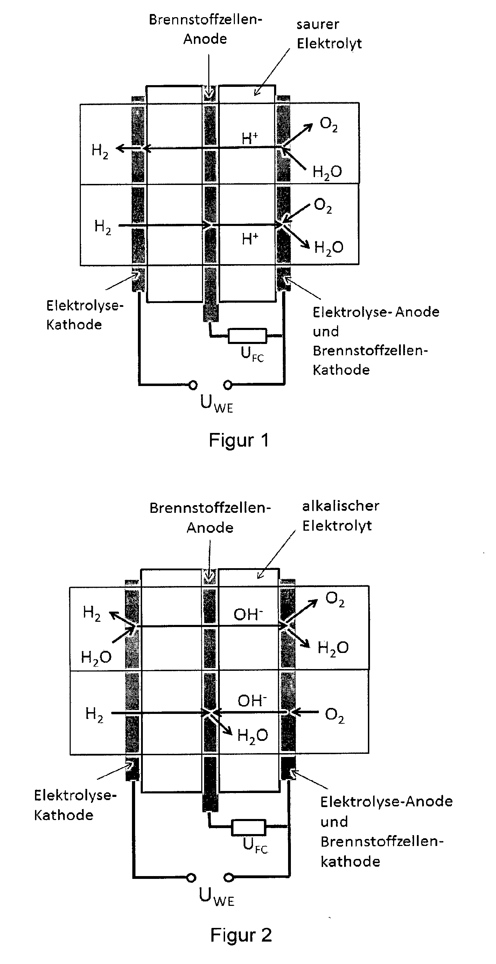

Figur 1 zeigt schematisch eine Ausgestaltung der Erfindung, bei der Wasser in einer erfindungsgemäßen Elektrolysezelle umgesetzt wird, die drei Elektroden sowie einen sauren Elektrolyten aufweist. Zwischen den beiden Elektroden (Anode und Kathode), an denen die elektrochemische Zerlegung des Wassers in der Regel stattfindet, ist eine zusätzliche dritte Elektrode innerhalb des Elektrolyten zwischen Anode und Kathode angeordnet, welche über einen Widerstand mit der Anode verbunden ist. Die dritte Elektrode besteht aus einem Material, an dem Wasserstoff elektrochemisch oxidiert werden kann.

In einem der Figur 1 entsprechenden Versuchsaufbau wurde als Anodenkatalysator Iridiumoxid und als Kathodenkatalysator auf Kohlenstoff geträgertes Platin eingesetzt. Als Katalysator der zusätzlichen dritten Elektrode wurde ebenfalls auf Kohlenstoff geträgertes Platin eingesetzt. Als Elektrolyt wurde Nafion® (saure Polymer-Elektrolyt-Membran) verwendet.

Die Spannung, die über den Widerstand zwischen dritter Elektrode und der Anode entsteht, wird mit U_{FC} gekennzeichnet. Die Elektrolysespannung wurde mit U_{WE} betitelt.

Der während der Elektrolyse an der Kathode erzeugte Wasserstoff permeiert teilweise durch die Membran zur dritten Elektrode. Dort wird der Wasserstoff an der dritten Elektrode zumindest teilweise unter Abgabe von Elektronen wieder zu Protonen umgewandelt. Die Elektronen wandern über den Widerstand zur Anode der Elektrolyse und damit werden dort die Protonen wieder reduziert.

Diese Ausgestaltung der Erfindung ist besonders vorteilhaft, wenn die Wasserelektrolyse als Differenzdruckverfahren durchgeführt wird, das bedeutet, dass auf der Wasserstoffseite ein deutlich höherer Druck eingestellt wird, als auf der Sauerstoffseite. Durch den erhöhten Druck auf der Kathodenseite findet in der Regel auch eine erhöhte, und nicht unerhebliche Wasserstoffpermeation durch den Elektrolyten statt, die zu einer deutlichen Verringerung der Effektivität der Elektrolyse insgesamt führt. Die Erfindung kann an dieser Stelle besonders effektiv eingreifen, da die hohe Konzentration an Wasserstoff im Umfeld der dritten Elektrode auch in erhöhtem Maße wieder zur Oxidation zu Protonen und Elektronen führt, die wiederum vorteilhaft als elektrische Leistung abgegriffen werden können.

In Figur 2 ist dieselbe Elektrolysezelle mit drei Elektroden dargestellt wie in Figur 1, nunmehr jedoch mit einem alkalischen Elektrolyten. Diese Anordnung ist bei Einsatz einer alkalischen Polymer-Elektrolyt-Membran als Elektrolyt besonders gut geeignet.

Der während der Elektrolyse an der Kathode erzeugte Wasserstoff permeiert teilweise durch die Membran zu dritten Elektrode. Dort wird der Wasserstoff an der dritten Elektrode zumindest teilweise unter Abgabe von Elektronen wieder zu Protonen umgewandelt, die in diesem Fall jedoch mit den vorhandenen OH-Ionen direkt zu Wasser reagieren.

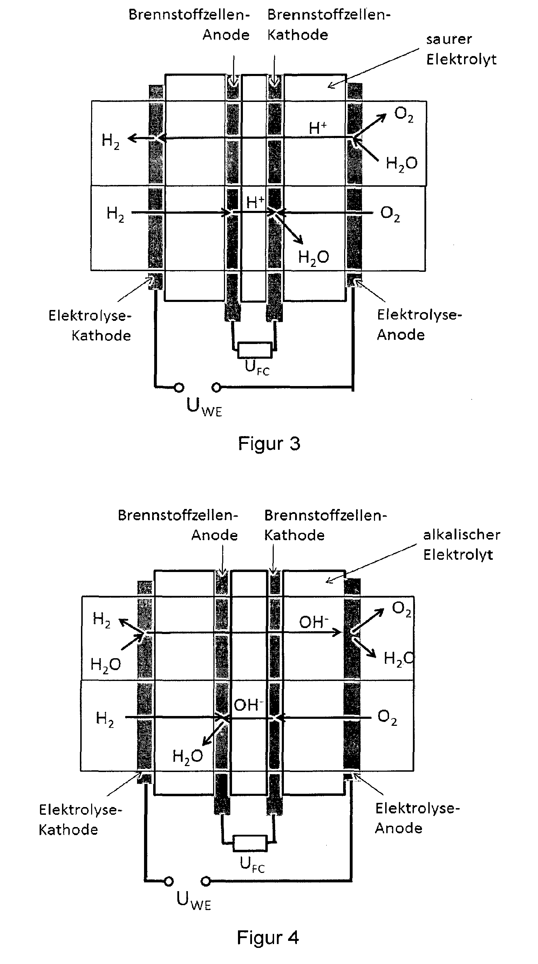

In Figur 3 ist eine weitere Ausgestaltung der Erfindung dargestellt, bei der Wasser in einer erfindungsgemäßen Elektrolysezelle umgesetzt wird, die einen sauren Elektrolyten aufweist. Zwischen den beiden Elektroden (Anode und Kathode), an denen die elektrochemische Zerlegung des Wassers in der Regel stattfindet, sind eine zusätzliche dritte sowie eine zusätzliche vierte Elektrode innerhalb des Elektrolyten zwischen Anode und Kathode angeordnet, welche im Unterschied zu Figur 1 nunmehr über einen Widerstand miteinander verbunden sind. Die dritte Elektrode bestehend aus einem Material, an dem Wasserstoff elektrochemisch oxidiert werden kann, während die vierte Elektrode aus einem Material besteht, an dem Sauerstoff elektrochemisch reduziert werden kann. Die notwendige Elektrolysespannung wurde mit U_{WE} betitelt.

Figur 4 zeigt schematisch eine weitere Ausgestaltung der Erfindung, wobei die Anordnung der der Figur 3 entspricht, bei der die Elektrolyse nunmehr jedoch mit einem alkalischen Elektrolyten umgesetzt wird. Zwischen den beiden Elektroden (Anode und Kathode), an denen die elektrochemische Zerlegung des Wassers in der Regel stattfindet, ist sowohl eine dritte als auch eine zusätzliche vierte Elektrode innerhalb des Elektrolyten zwischen Anode und Kathode angeordnet. Die dritte Elektrode bestehend aus einem Material, an dem Wasserstoff elektrochemisch oxidiert werden kann, während die vierte Elektrode aus einem Material besteht, an dem Sauerstoff elektrochemisch reduziert werden kann. Die Elektrolysespannung wurde mit U_{WE} betitelt.

Die Grundidee der Erfindung ist es, die nachteilige Wasserstoffpermeation über eine integrierte Brennstoffzelle innerhalb einer Elektrolysevorrichtung vorteilhaft dazu zu nutzen, zumindest teilweise eine Rückgewinnung von Energie in Form einer Spannung, bzw. eines Stroms zu erzielen.
[1] Schalenbach M, et al., Pressurized PEM water electrolysis: Efficiency and gas crossover, International Journal of Hydrogen Energy (2013), http://dx.doi.org/10.1016/j.ijhydene.2013.09.013

## Patentansprüche

1. Elektrochemische Zelle als Elektrolysezelle, mit einer Anode und einer Kathode, die über eine Gleichspannungsquelle verbunden sind, sowie mit einem zwischen der Anode und der Kathode angeordneten, Ionen leitenden Elektrolyten,
**dadurch gekennzeichnet, dass**
- zwischen der Anode und der Kathode wenigstens eine zusätzliche dritte Elektrode angeordnet ist, und
- wenigstens zwei der drei Elektroden über einen Widerstand miteinander verbunden sind, wobei der Widerstand maximal 1 kΩ beträgt.

2. Elektrochemische Zelle nach Anspruch 1, **dadurch gekennzeichnet, dass** eine zusätzliche dritte Elektrode angeordnet ist, und diese über den Widerstand mit der Anode verbunden ist.

3. Elektrochemische Zelle nach Anspruch 1, **dadurch gekennzeichnet, dass** eine zusätzliche dritte Elektrode und eine zusätzliche vierte Elektrode angeordnet sind, und die dritte und die vierte Elektrode über den Widerstand miteinander verbunden sind.

4. Elektrochemische Zelle nach einem der Ansprüche 1 bis 3, mit einem sauren Elektrolyten.

5. Elektrochemische Zelle nach einem der Ansprüche 1 bis 3, mit einem alkalischen Elektrolyten.

6. Elektrochemische Zelle nach Anspruch 1 bis 5, die als Elektrolyt eine Polymer-Elektrolyt-Membran (PEM) aufweist.

7. Verfahren zum Betreiben einer elektrochemischen Zelle nach einem der Ansprüche 1 bis 6 zur Zersetzung von Wasser, wobei zwischen der Kathode und der Anode eine erste Gleichspannung angelegt wird, die mindestens der die für die Elektrolyse notwendigen Zersetzungsspannung entspricht, **dadurch gekennzeichnet, dass** an den zwei Elektroden, die über einen Widerstand miteinander verbunden sind, während der Elektrolyse eine elektrische Leistung abgegriffen wird.

8. Verfahren nach vorhergehendem Anspruch 7, bei dem die zusätzliche dritte Elektrode über einen Widerstand mit der Anode verbunden ist, und zwischen der Anode und der dritten Elektrode eine elektrische Leistung abgegriffen wird.

9. Verfahren nach Anspruch 7 bis 8, bei dem zwischen der Anode und der Kathode eine Gleichspannung angelegt wird, die mindestens der Zersetzungsspannung von Wasser entspricht.

10. Verfahren zum Betreiben einer elektrochemischen Zelle nach einem der Ansprüche 3 bis 6, wobei zwischen der Kathode und der Anode eine erste Gleichspannung angelegt wird, die mindestens der die für die Elektrolyse notwendigen Zersetzungsspannung entspricht, **dadurch gekennzeichnet, dass** an der dritten und der vierten Elektrode, die über einen Widerstand miteinander verbunden sind, während der Elektrolyse eine elektrische Leistung abgegriffen wird.

11. Verfahren nach Anspruch 7 bis 10, bei dem die elektrochemischen Reaktionen an den Elektroden im sauren Milieu ablaufen.

12. Verfahren nach Anspruch 7 bis 10, bei dem die elektrochemischen Reaktionen an den Elektroden im basischen Milieu ablaufen.

13. Verfahren nach einem der Ansprüche 7 bis 12, bei dem auf der Kathodenseite ein höherer Druck eingestellt wird, als auf der Anodenseite, insbesondere ein Druck von mehr als 5 bar, vorteilhaft von mehr als 50 bar, und insbesondere mehr als 100 bar.

14. Verfahren nach Anspruch 7 bis 13, bei dem auf der Kathodenseite und der Anodenseite ein identischer Druck eingestellt wird.
